# EUROPEAN PATENT APPLICATION

(11) **EP 4 730 015 A1**
(43) Date of publication of application: **22.04.2026**
(21) Application number: 24869665.0
(22) Date of filing: 12.04.2024
(51) Int. Cl.: G02B 27/01, G02C 5/14, G02C 11/00, H04R 1/08

(54) **GLASSES TEMPLE, GLASSES AND WEARABLE DEVICE**

(30) Priority: 25.09.2023 CN 202322610488 U
(71) Applicant: Huawei Technologies Co., Ltd., Shenzhen, Guangdong 518129 (CN)
(72) Inventor: ZHANG, Tienan, Shenzhen, Guangdong 518129 (CN); JIA, Fengchao, Shenzhen, Guangdong 518129 (CN); PAN, Chunjiao, Shenzhen, Guangdong 518129 (CN); LI, Chunjian, Shenzhen, Guangdong 518129 (CN); ZHANG, Qiang, Shenzhen, Guangdong 518129 (CN); WANG, Chen, Shenzhen, Guangdong 518129 (CN); RAUSSI, Tommi, 80992 Munich (DE)
(74) Representative: Gill Jennings & Every LLP
(86) International application number: PCT/CN2024/087376
(87) International publication number: WO 2025/066096

(57) **Abstract**

Embodiments of this application provide a temple, glasses, and a wearable device. A mounting wall surface is provided on an outer surface of a housing of the temple. An accommodating cavity configured to accommodate a microphone is provided in the housing. A fairing covers the mounting wall surface. At least one first sound pickup channel is formed between an inner surface of the fairing and the mounting wall surface. A first sound pickup port and a second sound pickup port that communicate with the first sound pickup channel are provided on at least one of the fairing and the housing. The provision of the first sound pickup channel can implement diversion and attenuation of wind noise signals entering the interior of the temple, thereby achieving a wind noise reduction effect, reducing wind noise signals picked up by the microphone, ensuring normal use of glasses and other devices in a windy scenario, and improving user experience. The first sound pickup channel is formed by covering the outer surface of the housing with the fairing. A structural design and layout inside the housing of the temple are not affected. The structural design is easy to implement, and reduces difficulty and costs for implementing a wind noise prevention design on the temple.

## Description

### TECHNICAL FIELD

This application relates to the field of terminal technologies, and in particular, to a temple, glasses, and a wearable device.

### BACKGROUND

With continuous progress of science and technology, more electronic device products enter people's life. For example, wearable electronic devices are favored by a large quantity of users due to convenience of being wearable, intelligence, and multifunctionality. Smart glasses are used as an example. Smart glasses may enable interaction of visual, auditory, and other information, and meet user requirements such as making calls, listening to music, navigation, and virtual reality or augmented reality experience, and have gradually become one of relatively common wearable electronic devices in smart life.

**In** the example of smart glasses, the glasses may include temples, and the glasses may be worn on the head of a user by using the temples. For example, the temples may be positioned on ears. A temple may include a housing and a microphone. The housing may have an accommodating cavity, and a sound pickup port may be provided on the housing. An acoustic port of the microphone communicates with the sound pickup port. Sound made by the user may enter the microphone through the sound pickup port, and then be converted into an electronic signal, so that a voice interaction function such as a call of the device is implemented.

However, when glasses and other devices are used in a windy scenario, for example, outdoors, wind reaching a microphone causes the microphone to generate wind noise signals, affecting normal use of the device and degrades user experience.

### SUMMARY

Embodiments of this application provide a temple, glasses, and a wearable device. A bent design of a first sound pickup channel in the temple can weaken transmission of pulsating pressure formed by external wind vortices, thereby achieving a wind noise reduction effect, ensuring normal use of the device in a windy scenario, and significantly improving user experience.

A first aspect of the embodiments of this application provides a temple, including a housing, where a mounting wall surface is provided on an outer surface of the housing, an accommodating cavity is provided at a position that is in the housing and that corresponds to the mounting wall surface, and the accommodating cavity is configured to accommodate a microphone. The temple further includes a fairing, where the fairing covers the mounting wall surface, there is a gap between an inner surface of the fairing and the mounting wall surface to form at least one first sound pickup channel, and the first sound pickup channel communicates with the accommodating cavity, where a first sound pickup port and a second sound pickup port are provided on at least one of the fairing and the housing, the first sound pickup port and the second sound pickup port separately communicate with the first sound pickup channel, and the first sound pickup port and the second sound pickup port are respectively located on two sides of the housing. After wind vortices are picked up by the first sound pickup port and the second sound pickup port, the wind vortices need to be transmitted to the microphone through the first sound pickup channel. The provision of the first sound pickup channel can attenuate wind noise signals entering the temple, thereby achieving a wind noise reduction effect, reducing wind noise signals picked up by the microphone, improving a sound pickup effect of the microphone, ensuring normal use of glasses and other devices in a windy scenario, and improving user experience.

In addition, the first sound pickup channel, the first sound pickup port, and the second sound pickup port can be formed by covering the outer surface of the housing with the fairing. A structural design is simple and easy to implement, and a structural design and layout inside the housing of the temple are not affected. This can be achieved simply by covering the outer surface of the housing with the fairing, thereby reducing difficulty in the structural design and production implementation of the temple, facilitating promotion implementation, and reducing difficulty and costs incurred for implementing a wind noise prevention design on the temple.

In a possible implementation, the inner surface of the fairing encloses a groove structure, a part of the mounting wall surface protrudes to form a protrusion structure that fits the groove structure, and there is a gap between the groove structure and the protrusion structure to form the first sound pickup channel. The protrusion structure is formed by a curved protrusion on the mounting wall surface of the housing, and the groove structure is formed by a curved recess enclosed on the inner surface of the fairing. Therefore, the first sound pickup channel located between the protrusion structure and the groove structure may be designed with a bent structure. In other words, the first sound pickup channel is a channel that extends in a bent and curved manner, instead of a flat channel that extends horizontally. This can elongate the first sound pickup channel, elongate a path for the wind vortices from the first sound pickup port and/or the second sound pickup port to the accommodating cavity, effectively weaken transmission of pulsating pressure formed by the wind vortices in the first sound pickup channel, reduce impact of wind noise on the microphone, achieve a wind noise attenuation effect, further reduce the wind noise signals picked up by the microphone, further help improve the wind noise reduction effect, and ensure normal use of the glasses in a windy scenario.

In a possible implementation, the fairing includes a first side wall, a second side wall, and a third side wall that are connected, the second side wall is located between the first side wall and the third side wall, and the first side wall and the third side wall are opposite to each other. Inner surfaces of the first side wall, the second side wall, and the third side wall enclose the groove structure. The structure is simple and facilitates implementation of the groove structure. This helps reduce difficulty in a structural design and production of the fairing under a condition that the bent first sound pickup channel is formed.

The first sound pickup port is provided at an end that is of the first side wall and that faces away from the second side wall, and the second sound pickup port is provided at an end that is of the third side wall and that faces away from the second side wall. Therefore, the two sound pickup ports are provided on the fairing, and no opening needs to be provided on the housing to form a sound pickup port. This further reduces impact on a structural layout of the housing, and facilitates protection of structural components in the accommodating cavity of the housing.

In a possible implementation, a second sound pickup channel is provided on the mounting wall surface, and the second sound pickup channel separately communicates with the first sound pickup channel and the accommodating cavity, so that when the fairing covers the mounting wall surface to form the first sound pickup channel, the first sound pickup channel communicates with the accommodating cavity. The structural design is simple and facilitates implementation of production and assembly.

In a possible implementation, the first sound pickup channel includes at least one bent segment. The bent segment means that a part of the channel is bent rather than straight, and it may be understood that a straight channel is bent to have a bending angle.

The bent segment is located between the second sound pickup channel and at least one of the first sound pickup port and the second sound pickup port, and at least one of the first sound pickup port and the second sound pickup port communicates with the second sound pickup channel through the bent segment. In other words, in a process in which the wind vortices enter the second sound pickup channel (microphone) from the first sound pickup port and the second sound pickup port, the wind vortices pass through at least one bent segment. This effectively elongates the transmission path of the wind vortices, ensures that transmission of the pulsating pressure formed by the wind vortices in the first sound pickup channel is weakened, and achieves a relatively good wind noise attenuation effect.

In a possible implementation, the first sound pickup channel includes a first horizontal segment, a vertical segment, and a second horizontal segment that are sequentially connected, one bent segment is connected between the first horizontal segment and the vertical segment, and another bent segment is connected between the second horizontal segment and the vertical segment; and the first sound pickup port communicates with the first horizontal segment, the second sound pickup port communicates with the second horizontal segment, and the vertical segment communicates with the second sound pickup channel. In other words, a first bent segment is provided between the first sound pickup port and the second sound pickup channel, and a second bent segment is provided between the second sound pickup port and the second sound pickup channel. This ensures that wind entering from the first sound pickup port and the second sound pickup port needs to flow through one bent segment before entering the second sound pickup channel, thereby more effectively weakening transmission of the pulsating pressure formed by the wind vortices in the first sound pickup channel, and ensuring that wind noise has less impact on the microphone. In addition, the structural design is relatively simple and facilitates production implementation.

In a possible implementation, an extension direction of the first sound pickup port intersects an extension direction of the first horizontal segment, so that a bent area is formed at a position at which the first sound pickup port communicates with the first horizontal segment. An extension direction of the second sound pickup port intersects an extension direction of the second horizontal segment, so that a bent area is formed at a position at which the second sound pickup port communicates with the second horizontal segment. This can further elongate the path for the wind noise from the sound pickup port to the microphone, weaken transmission of the pulsating pressure of the vortices in the first sound pickup channel, further reduce the impact of the wind noise, achieve a better wind noise reduction effect, and significantly improve the sound pickup effect of the microphone.

In a possible implementation, the accommodating cavity includes a first chamber and a second chamber, and each of the first chamber and the second chamber is configured to accommodate a microphone; and there are two second sound pickup channels: a first channel and a second channel, where the first channel communicates with the first chamber, and the second channel communicates with the second chamber. Therefore, two microphones may be disposed in the temple. For example, the first microphone may be used as a primary microphone, and the second microphone may be used as a secondary microphone, so that a better sound pickup effect can be achieved, and that sound pickup performance of the device can be improved.

In a possible implementation, there is one first sound pickup channel, where two ends of the first sound pickup channel respectively communicate with the first sound pickup port and the second sound pickup port; and the first channel and the second channel separately communicate with the first sound pickup channel. The first sound pickup port and the second sound pickup port in communication can form a pressure relief design, to reduce the impact of the wind noise on the microphone. For example, the wind vortices may enter through the first sound pickup port, and some of the wind vortices enter the accommodating cavity through the second sound pickup channel, but some of the wind vortices may flow out through the second sound pickup port, thereby achieving a flow diversion and pressure relief effect. This can further reduce the wind noise signals picked up by the microphone, and further improve the wind noise reduction effect. Correspondingly, some of the wind vortices entering through the second sound pickup port may flow out through the first sound pickup port, thereby further improving the wind noise reduction effect.

In a possible implementation, a support portion is disposed on the mounting wall surface, and the support portion is located between the mounting wall surface and the inner surface of the fairing. The support portion supports the fairing, to alleviate or avoid a problem that denting or other phenomena occurring on the fairing in a use process or the like affect aesthetics or even block the first sound pickup channel.

In a possible implementation, there are two first sound pickup channels: a third channel and a fourth channel, where two ends of the third channel respectively communicate with the first sound pickup port and the second sound pickup port, and two ends of the fourth channel respectively communicate with the first sound pickup port and the second sound pickup port; and the third channel communicates with the first channel, and the fourth channel communicates with the second channel. In other words, sound or the like entering the third channel is transmitted to the first microphone in the first chamber through the first channel, and sound or the like entering the fourth channel is transmitted to the second microphone in the second chamber through the second channel. The sound pickup channels that correspondingly communicate with the first microphone and the second microphone are relatively independent. This helps improve sound pickup effects of the first microphone and the second microphone, and further helps improve a sound pickup effect of the entire device.

In addition, the third channel and the fourth channel share the first sound pickup port and the second sound pickup port, and the first sound pickup port and second sound pickup port that communicate with each other may also form a pressure relief design, thereby further improving the noise reduction effect, significantly reducing impact of wind noise on the first microphone and the second microphone, and improving the sound pickup effects of the first microphone and the second microphone.

In a possible implementation, there are two first sound pickup channels: a third channel and a fourth channel, where the first sound pickup port communicates with the third channel, and the second sound pickup port communicates with the fourth channel; and the third channel communicates with the first channel, and the fourth channel communicates with the second channel. Sound or the like entering from the first sound pickup port may enter the first microphone in the first chamber after passing through the third channel and the first channel. Sound or the like entering from the second sound pickup port may enter the second microphone in the second chamber after passing through the fourth channel and the second channel. In this way, the sound pickup ports and sound pickup channels that correspondingly communicate with the first microphone and the second microphone are all relatively independent, and the sound pickup effects of the first microphone and the second microphone can be improved more effectively.

In a possible implementation, a separation portion is disposed on the mounting wall surface, the separation portion is located between the inner surface of the fairing and the mounting wall surface, and the separation portion extends from a side adjacent to the first sound pickup port to a side adjacent to the second sound pickup port; and the separation portion partitions the gap between the inner surface of the fairing and the mounting wall surface to form the two first sound pickup channels. The two first sound pickup channels between the fairing and the housing can be designed by forming the separation portion on the mounting wall surface of the housing. The structure is simple and easy to implement.

In a possible implementation, the outer surface of the housing includes a top side surface and a bottom side surface, where the top side surface and the bottom side surface are disposed opposite to each other in a first direction; and the outer surface of the housing further includes an inner side surface and an outer side surface, where the inner side surface and the outer side surface are disposed opposite to each other in a second direction, the second direction is perpendicular to the first direction, the inner side surface is configured to be in contact with a user when the temple is worn, and the mounting wall surface is formed on the outer side surface.

In a possible implementation, the first sound pickup port and the second sound pickup port are respectively elongated slit structures, and the first sound pickup channel is a slit-shaped channel, so that the first sound pickup channel may be an elongated slit structure. The first sound pickup channel may be a slit-shaped channel with a relatively small slit width and a relatively large area. Air resistance in the first sound pickup channel is relatively large. This can further weaken transmission of the pulsating pressure of the wind vortices in the first sound pickup channel, and optimize the noise reduction effect. In addition, the wind vortices entering from the narrow first sound pickup port and first sound pickup channel become laminar flow, which can also reduce the impact of the wind noise on the microphone.

In a possible implementation, widths of the first sound pickup channel, the first sound pickup port, and the second sound pickup port are all 0.5 mm. Because slit widths are relatively small, the noise reduction effect can be improved more effectively.

A second aspect of the embodiments of this application provides glasses, including a frame and any one of the foregoing temples. The temple is fastened to the frame, and the glasses are worn by a user by using the frame and the temple. Because the temple is included and the temple has good windproof and noise reduction effects, noise reduction and sound pickup effects of the glasses can be effectively improved, normal use of the glasses in a windy scenario or the like can be ensured, and user experience can be improved.

A third aspect of the embodiments of this application provides a wearable device, including a wearable apparatus and any one of the foregoing temples. The wearable apparatus is configured to implement interaction, the temple is fastened to the wearable apparatus, and the wearable apparatus is worn by a user by using the temple. Because the temple is included and the temple has good windproof and noise reduction effects, noise reduction and sound pickup effects of the wearable device can be effectively improved, normal use of the wearable device in a windy scenario or the like can be ensured, and user experience can be improved.

### BRIEF DESCRIPTION OF DRAWINGS

FIG. 1 is a diagram of a structure of a temple according to an embodiment of this application;
FIG. 2 is an exploded diagram of a structure of a temple according to an embodiment of this application;
FIG. 3 is a diagram of a cross-sectional structure of the temple in FIG. 1, formed along an A-A plane;
FIG. 4 is a cross-sectional plan view of the temple in FIG. 1 along the A-A plane;
FIG. 5 is an enlarged view of a first sound pickup port of a temple according to an embodiment of this application;
FIG. 6 is a diagram of a structure of a fairing according to an embodiment of this application;
FIG. 7 is a diagram of a partial structure of a housing according to an embodiment of this application;
FIG. 8 is a diagram of a partial cross-sectional structure of the temple in FIG. 1 along a B-B plane;
FIG. 9 is a diagram of another cross-sectional structure of a temple according to an embodiment of this application;
FIG. 10 is a diagram illustrating a comparison of frequency responses of wind noise signals of a temple according to an embodiment of this application;
FIG. 11 is a diagram of a structure of another temple according to an embodiment of this application;
FIG. 12 is an exploded diagram of a structure of another temple according to an embodiment of this application;
FIG. 13 is an enlarged partial view of a housing of another temple according to an embodiment of this application;
FIG. 14 is a diagram of a partial cross-sectional structure of the temple in FIG. 11 along a B-B plane;
FIG. 15 is a diagram of a partial cross-sectional structure of the temple in FIG. 11 along a C-C plane;
FIG. 16 is a diagram of a partial cross-sectional structure of the temple in FIG. 11 along an A-A plane;
FIG. 17 is a diagram of a structure of still another temple according to an embodiment of this application;
FIG. 18 is an enlarged view of a partial structure of the temple in FIG. 17;
FIG. 19 is a diagram of a partial cross-sectional structure of the temple in FIG. 17 along a C-C plane; and
FIG. 20 is a diagram of a partial cross-sectional structure of the temple in FIG. 17 along an A-A plane.

### Reference numerals:

100-temple;
   11-first sound pickup channel; 11a-third channel; 11b-fourth channel;
      101-first bent segment; 102-second bent segment;
      111-first horizontal segment; 112-vertical segment; 113-second horizontal segment;
   12-housing; 120a-housing body; 120b-housing cover;
      102a-inner side surface; 102b-outer side surface; 102c-top side surface; 102d-bottom side surface;
      12a-mating groove; 12b-protrusion structure;
      121-mounting wall surface; 122-support portion; 123-separation portion; 124-fixing portion; 125-assembly groove;
   13-fairing; 13a-groove structure;
      131-inner surface; 132-first side wall; 133-second side wall; 134-third side wall;
   14-accommodating cavity; 141-first chamber; 142-second chamber;
      151-first sound pickup port; 152-second sound pickup port;
   16-second sound pickup channel; 16a-first channel; 16b-second channel;
200-microphone.

### DESCRIPTION OF EMBODIMENTS

Terms used in embodiments of this application are only used to explain specific embodiments of this application, but are not intended to limit this application.

An embodiment of this application provides a temple, which may be applied to a wearable electronic device. The wearable device may be smart glasses. The smart glasses may have an independent operating system, and may complete functions such as adding a schedule, performing map navigation, interacting with a friend, taking a photo and a video, and making a call with a friend through speech or action control, and may implement wireless network access through a mobile communication network.

The glasses may include a frame and temples. One temple may be fastened on each of two sides of the frame. The frame may be configured to mount lenses. The lenses may be ordinary lenses. A user may observe a scene outside the glasses through the lenses. Alternatively, the lenses may be lenses that can implement display of images or the like, and the lenses may present specific images or the like.

The glasses may be worn on the head of the user by using the temples. For example, the temples may be positioned on ears on the head of the user, and the ears provide stable support for the temples, to achieve wearing. The frame may be positioned on a bridge of the nose on the head of the user, to further ensure stable wearing of the glasses on the head.

The temples may be rotatably fitted with the frame. For example, the two temples may be rotatably fitted with the frame separately through structures such as hinges and rotating shafts, so that the temples are rotatable relative to the frame and foldable (for example, an included angle between the temples and the frame may be 0°), thereby facilitating storage of the glasses. When the glasses need to be worn, the temples may be rotated, so that the temples are rotated and unfolded relative to the frame (for example, the included angle between the temples and the frame may be 90°). The two temples may be clamped onto the head of the user, the two temples are positioned on the ears, and the frame is positioned on the bridge of the nose.

Certainly, in some other examples, the temples and the frame may not be limited to a form of rotatable fitting with each other. For example, the temples and the frame may be fixedly assembled to each other, and relative rotations cannot occur between the temples and the frame.

Alternatively, the wearable device may be an augmented reality (augmented reality, AR for short) electronic device, a virtual reality (virtual reality, VR for short) electronic device, a mixed reality (mixed reality, MR for short) electronic device, or the like, for example, may be VR glasses, AR glasses, or MR glasses. Certainly, in some other examples, the wearable device may not be limited to a form of glasses, and may be another type of wearable device, for example, another wearable device adapted to the head.

The wearable device may include a wearable apparatus and temples. The wearable apparatus may be configured to implement interaction with the user. For example, the wearable device is AR glasses. The wearable apparatus may be an AR apparatus, and may superimpose virtual data on a real-time image captured by the apparatus and display the image, to implement interaction or the like with the user.

Correspondingly, one temple may be fastened on each side of the wearable apparatus, and the wearable apparatus may be worn on the head of the user by using the temples. The temples may be rotatably fitted with the wearable apparatus. Alternatively, the temples and the wearable apparatus may be fixedly assembled to each other, and relative rotations cannot occur.

In embodiments of this application, a temple is described by using smart glasses as an example.

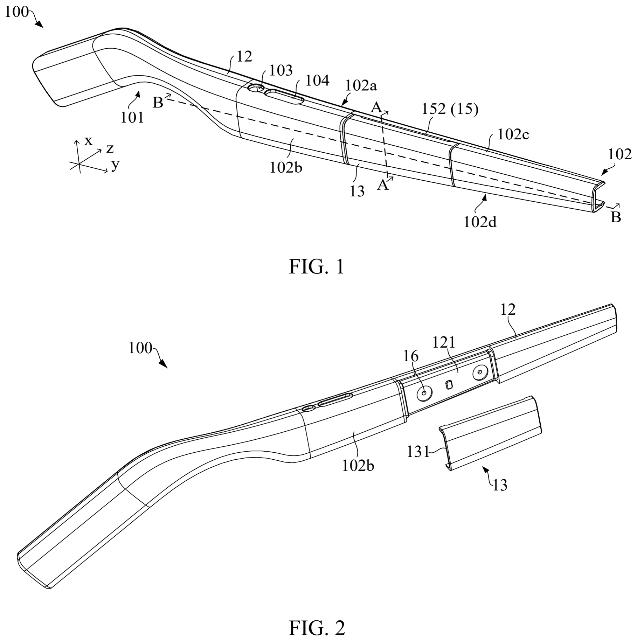

FIG. 1 is a diagram of a structure of a temple according to an embodiment of this application.

As shown in FIG. 1, the temple 100 may include a housing 12. The housing 12 may be used as a main bearing structural component of glasses. The housing 12 may provide assembly space for a plurality of structural component of the glasses.

For example, the housing 12 may include a connection end 102 and a wearing end 101. The connection end 102 may be used for fastening to a frame, and the wearing end 101 may be used for positioning and wearing on an ear of a user. For example, one side of the wearing end 101 may be recessed to form an arc structure for positioning on the ear.

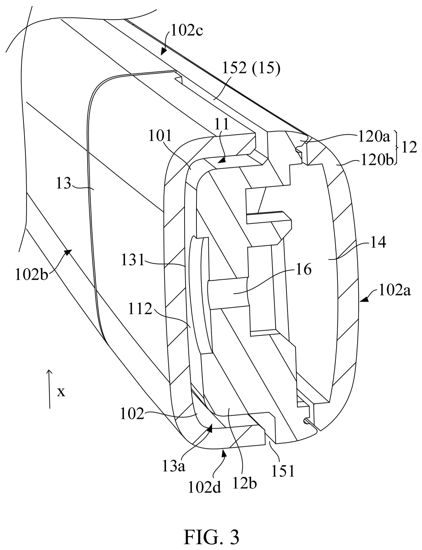

In this embodiment of this application, as shown in FIG. 1, the housing 12 may include an inner side surface 102a, an outer side surface 102b, a top side surface 102c, and a bottom side surface 102d (as shown in FIG. 3). The inner side surface 102a may be disposed opposite to the outer side surface 102b. The top side surface 102c may be disposed opposite to the bottom side surface 102d.

For example, the top side surface 102c and the bottom side surface 102d are opposite to each other in a first direction, for example, an x direction in FIG. 1. The direction may also be used as a thickness direction of the temple 100. A length direction of the temple 100 is a second direction, for example, a y direction in FIG. 1. The wearing end 101 and the connection end 102 of the housing 12 may be disposed opposite to each other in the length direction. For example, the outer side surface 102b and the inner side surface 102a are opposite to each other in a third direction, for example, a z direction in FIG. 1. The direction may also be used as a width direction of the temple 100. When the glasses are worn, the inner side surface 102a of the housing 12 may be in contact with the face (head) of the user, and the bottom side surface 102d may be a side that is of the housing 12 and that is relatively close to the nose.

The temple 100 may further include a sound pickup port 15, and the sound pickup port 15 is configured to obtain sound in an environment. An accommodating cavity (as shown in FIG. 3) may be further provided inside the housing 12, and the accommodating cavity may accommodate a microphone that is fixedly disposed. The sound pickup port 15 may communicate with an acoustic port of the microphone in the accommodating cavity, so that sound outside the temple 100 can be picked up by the sound pickup port 15 and transmitted to the microphone. The microphone can implement conversion between a sound signal and an electronic signal, thereby implementing a voice control function, a call function, and the like.

It may be understood that the structure illustrated in this embodiment of this application does not constitute a specific limitation on a housing assembly. In some other embodiments of this application, the housing assembly may include more or fewer structural components than those shown in the figure, or some structural components may be combined, or some structural components may be split, or different structural component arrangements may be used.

For example, the electronic device may further include a speaker, and a sound output port 103 (as shown in FIG. 1) may also be provided on the housing 12 of the housing assembly. The accommodating cavity 14 may be further configured to accommodate the speaker. A sound output channel (not shown in the figure) may also be provided in the housing 12. The speaker may communicate with the sound output port 103 through the sound output channel. The speaker may implement conversion between an electronic signal and a sound signal, and a generated sound may be transmitted through the sound output channel and the sound output port 103, to implement functions such as call interaction and audio playing.

The electronic device may further include a circuit board. A data interface 104 may be provided on the housing 12 of the housing assembly. The accommodating cavity 14 may be further configured to accommodate the circuit board. The circuit board may be connected to the data interface 104. The data interface 104 may be configured to supply power to the device. Alternatively, the data interface 104 may be configured to connect the device to an external multimedia device or the like.

Certainly, in some other examples, the accommodating cavity 14 may be further configured to accommodate other structural components that can improve functions of the electronic device. For example, the accommodating cavity 14 may be further configured to accommodate a circuit board, a sensor, and the like.

It may be understood that use effects of the voice control function, the call function, and the like are greatly associated with sound pickup effects of the microphone and the sound pickup port. When the device such as the glasses is used outdoors in scenarios with relatively strong airflow, for example, walking against the wind, riding a bicycle, or other high-wind scenarios, vortices generated by air flowing over the head of the user and the device such as the glasses strike the sound pickup port and the microphone, forming pulsating pressure applied to the microphone. The microphone picks up wind noise signals, resulting in annoying noise or unwanted noise, which makes it difficult for the other party to clearly hear a conversation or other content, affects normal use of the device, and degrades user experience. Therefore, wind noise reduction or wind noise prevention also becomes one of major problems in research of electronic devices.

In view of this, an embodiment of this application provides a temple. A first sound pickup channel is provided between a sound pickup port and a microphone, to attenuate wind noise signals entering the temple, so that impact of vortices on the microphone can be reduced, and that wind noise signals picked up by the microphone can be effectively reduced, thereby achieving a wind noise reduction effect or wind noise prevention effect.

FIG. 2 is an exploded diagram of a structure of a temple according to an embodiment of this application.

As shown in FIG. 2, the temple 100 may further include a fairing 13. A mounting wall surface 121 may be provided on an outer surface of the housing 12. For example, the mounting wall surface 121 may be located on the outer side surface 102b of the housing 12.

The fairing 13 may cover the mounting wall surface 121 of the housing 12, that is, the fairing 13 covers the outer surface of the housing 12. For example, the fairing covers a part of an outer surface of the outer side surface 102b.

FIG. 3 is a diagram of a cross-sectional structure of the temple in FIG. 1, formed along an A-A plane.

With reference to FIG. 3, a surface that is of the fairing 13 and that faces the mounting wall surface 121 is an inner surface 131 of the fairing 13, and there is a gap between the inner surface 131 of the fairing 13 and the mounting wall surface 121 of the housing 12, to form a first sound pickup channel 11.

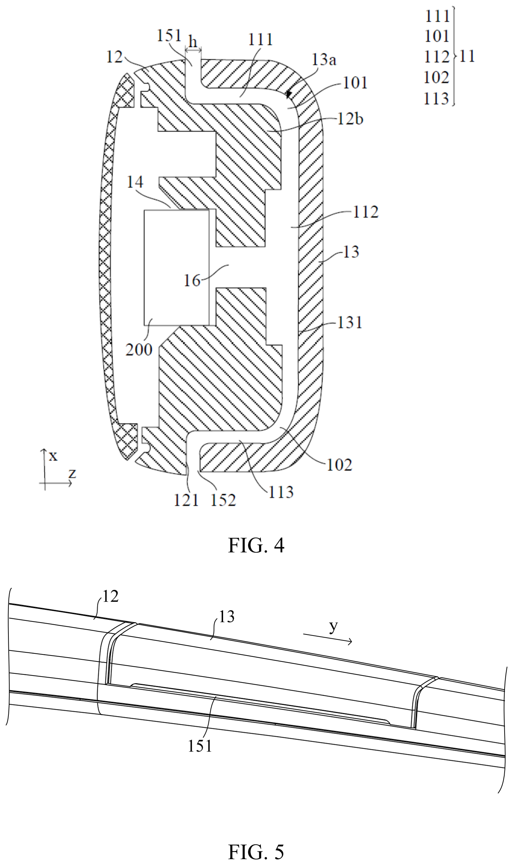

The accommodating cavity 14 is provided in the housing 12. For example, the housing 12 may include a housing body 120a and a housing cover 120b. The housing cover 120b covers the housing body 120a, and the housing body 120a and the housing cover 120b jointly enclose the accommodating cavity 14. The accommodating cavity 14 may be configured to accommodate the microphone (as shown in FIG. 4). The mounting wall surface 121 may be formed on a surface that is of the housing body 120a and that faces away from the housing cover 120b.

The first sound pickup channel 11 communicates with the accommodating cavity 14 in the housing 12. Specifically, the first sound pickup channel 11 may communicate with the acoustic port of the microphone in the accommodating cavity 14. For example, with reference to FIG. 2 and FIG. 3, a second sound pickup channel 16 may also be provided on the mounting wall surface 121, the first sound pickup channel 11 communicates with the second sound pickup channel 16, and the second sound pickup channel 16 communicates with the accommodating cavity 14, so that the first sound pickup channel 11 communicates with the accommodating cavity 14 through the second sound pickup channel 16.

The second sound pickup channel 16 may be a through hole. For example, the second sound pickup channel 16 may be a through hole that penetrates the housing body 120a. One end of the second sound pickup channel 16 may be located on the mounting wall surface 121. The other end of the second sound pickup channel 16 may extend into the housing 12 and communicate with the accommodating cavity 14.

A first sound pickup port 151 and a second sound pickup port 152 may be provided on at least one of the fairing 13 and the housing 12. For example, the first sound pickup port 151 and the second sound pickup port 152 are provided on the fairing 13. The first sound pickup port 151 and the second sound pickup port 152 separately communicate with the first sound pickup channel 11, so that the first sound pickup port 151 and the second sound pickup port 152 can separately communicate with the microphone in the accommodating cavity 14 through the first sound pickup channel 11.

Sound outside the temple may be picked up by the first sound pickup port 151 and the second sound pickup port 152, and transmitted to the microphone through the first sound pickup channel 11. Correspondingly, after wind vortices are picked up by the first sound pickup port 151 and the second sound pickup port 152, the wind vortices need to be transmitted to the microphone through the first sound pickup channel 11. The provision of the first sound pickup channel 11 can attenuate wind noise signals entering the temple, thereby achieving a wind noise reduction effect, reducing wind noise signals picked up by the microphone, improving a sound pickup effect of the microphone, ensuring normal use of the device such as the glasses in a windy scenario, and improving user experience.

In addition, the first sound pickup channel 11 can be formed by covering the outer surface of the housing 12 with the fairing 13. A structural design is simple and easy to implement, and a structural design and layout inside the housing 12 of the temple are not affected. This can be achieved simply by covering the outer surface of the housing 12 with the fairing 13, thereby reducing difficulty in the structural design and production implementation of the temple, facilitating promotion implementation, and reducing difficulty and costs incurred for implementing a wind noise prevention design on the temple.

The first sound pickup port 151 and the second sound pickup port 152 may be respectively located on two opposite sides of the housing 12. For example, the first sound pickup port 151 and the second sound pickup port 152 may be located on two opposite sides of the housing 12 in the first direction. For example, the first sound pickup port 151 may be located on a same side as the top side surface 10c of the housing 12, and the second sound pickup port 152 may be located on a same side as the bottom side surface 10d of the housing 12. This can reduce or avoid cases in which sweat or other contaminants from the head of the user enter the first sound pickup channel 11 and the microphone from the first sound pickup port 151 and the second sound pickup port 152 during use such as wearing, thereby better protecting other structural components in the microphone or the accommodating cavity, and prolonging a service life of the device.

With continued reference to FIG. 3, the inner surface 131 of the fairing 13 may enclose a groove structure 13a, and a part of the mounting wall surface 121 of the housing 12 may protrude to form a protrusion structure 12b. The protrusion structure 12b may fit the groove structure 13a. When the fairing 13 covers the housing 12, the protrusion structure 12b is accommodated in the groove structure 13a, and there is a gap between the groove structure 13a and the protrusion structure 12b to form the first sound pickup channel 11.

FIG. 4 is a cross-sectional plan view of the temple in FIG. 1 along the A-A plane.

It may be understood that, with reference to FIG. 3 and FIG. 4, the protrusion structure 12b is formed by a curved protrusion on the mounting wall surface 121 of the housing 12, and the groove structure 13a is formed by a curved recess enclosed on the inner surface 131 of the fairing 13. Therefore, the first sound pickup channel 11 located between the protrusion structure 12b and the groove structure 13a may be designed with a bent structure. In other words, the first sound pickup channel 11 is a channel that extends in a bent and curved manner, instead of a flat channel that extends horizontally. This can elongate the first sound pickup channel 11, elongate a path for the wind vortices from the first sound pickup port 151 and/or the second sound pickup port 152 to the accommodating cavity 14, effectively weaken transmission of pulsating pressure formed by the wind vortices in the first sound pickup channel 11, reduce impact of wind noise on the microphone, achieve a wind noise attenuation effect, further reduce the wind noise signals picked up by the microphone, further help improve the wind noise reduction effect, and ensure normal use of the glasses in a windy scenario.

For example, the first sound pickup channel may include at least one bent segment. The bent segment means that a part of the channel is bent rather than straight, and it may be understood that a straight channel is bent to have a bending angle. For example, this part of the channel may be a curved arc channel, as shown in a cross-section of the first sound pickup channel 11 in FIG. 4, where the first bent segment 101 may be in an arc shape.

It may be understood that a specific bending angle, a bending shape, and the like of the bent segment may be selected and set based on an actual requirement. For example, the bent segment may be a right-angle bend or a trapezoidal bend.

The bent segment may be located between the second sound pickup channel and at least one of the first sound pickup port and the second sound pickup port, and at least one of the first sound pickup port and the second sound pickup port communicates with the second sound pickup channel through the bent segment. In other words, in a process in which the wind vortices enter the second sound pickup channel (microphone) from the first sound pickup port and the second sound pickup port, the wind vortices pass through at least one bent segment. This effectively elongates the transmission path of the wind vortices, ensures that transmission of the pulsating pressure formed by the wind vortices in the first sound pickup channel is weakened, and achieves a relatively good wind noise attenuation effect.

For example, as shown in FIG. 3, assuming that the first sound pickup channel 11 includes two bent segments: a first bent segment 101 and a second bent segment 102, the first bent segment 101 may be located between the first sound pickup port 151 and the second sound pickup channel 16, and the second bent segment 102 may be located between the second sound pickup port 152 and the second sound pickup channel 16.

As shown in FIG. 4, the first sound pickup channel 11 may include a first horizontal segment 111, a vertical segment 112, and a second horizontal segment 113 that are sequentially connected. The first bent segment 101 may be located between the first horizontal segment 111 and the vertical segment 112, and the first horizontal segment 111 may communicate with the vertical segment 112 through the first bent segment 101. The second bent segment 102 may be located between the second horizontal segment 113 and the vertical segment 112, and the second horizontal segment 113 may communicate with the vertical segment 112 through the second bent segment 102.

The vertical segment 112 may communicate with the second sound pickup channel 16, the first sound pickup port 151 may communicate with the first horizontal segment 111, and the second sound pickup port 152 may communicate with the second horizontal segment 113. In other words, the first bent segment 101 is provided between the first sound pickup port 151 and the second sound pickup channel 16, and the second bent segment 102 is provided between the second sound pickup port 152 and the second sound pickup channel 16. This ensures that wind entering from the first sound pickup port 151 and the second sound pickup port 152 needs to flow through one bent segment before entering the second sound pickup channel, thereby more effectively weakening transmission of the pulsating pressure formed by the wind vortices in the first sound pickup channel 11, and ensuring that wind noise has less impact on the microphone 200. In addition, the structural design is relatively simple and facilitates production implementation.

For example, a cross-section (a cross-section formed along the A-A plane in FIG. 1) of the first sound pickup channel 11 may have a shape similar to a square bracket shown in FIG. 4, and there are a plurality of bent areas, which further helps improve the wind noise reduction effect. Certainly, in some other examples, the shape of the cross-section of the first sound pickup channel 11 may alternatively be another regular or irregular shape such as a C shape or an arc shape.

The first sound pickup port 151 is used as an example. Wind vortices entering from the first sound pickup port 151 need to flow through the first horizontal segment 111, the first bent segment 101, the vertical segment 112, and the second sound pickup channel 16 before entering the microphone 200 in the accommodating cavity 14. After transmission along the bent long path, impact of the wind vortices on the microphone 200 is weakened, and the wind noise signals picked up by the microphone 200 are reduced.

Correspondingly, wind vortices entering from the second sound pickup port 152 need to flow through the second horizontal segment 113, the second bent segment 102, the vertical segment 112, and the second sound pickup channel 16 before entering the microphone 200 in the accommodating cavity 14, so that the wind noise signals picked up by the microphone 200 are reduced.

It may be understood that, the fairing 13 covers the mounting wall surface 121, the second sound pickup channel 16 is provided on the mounting wall surface 121, the accommodating cavity 14 is provided at a position that is in the housing 12 and that corresponds to the mounting wall surface 121, and the accommodating cavity 14 is located on a side that is of the mounting wall surface 121 and that faces away from the fairing 13. In this way, a bent area is also formed at a position at which the vertical segment 112 communicates with the second sound pickup channel 16. This can further elongate a path for the wind noise from the sound pickup port to the microphone 200, and weaken transmission of the pulsating pressure of the vortices in the first sound pickup channel 11 and the second sound pickup channel 16, thereby further reducing the impact of the wind noise and achieving a better wind noise reduction effect.

For example, a center line of the second sound pickup channel 16 may be perpendicular to the vertical segment 112, so that the impact of the wind noise can be reduced more effectively, and that a better wind noise reduction effect can be achieved.

With continued reference to FIG. 4, an extension direction of the first sound pickup port 151 may intersect an extension direction of the first horizontal segment 111, and an extension direction of the second sound pickup port 152 may intersect an extension direction of the second horizontal segment 113. The extension direction may be a transmission direction of the airflow. Therefore, a bent area is formed at a position at which the first sound pickup port 151 communicates with the first horizontal segment 111, and a bent area is formed at a position at which the second sound pickup port 152 communicates with the second horizontal segment 113. This can further elongate the path for the wind noise from the first sound pickup port 151 and the second sound pickup port 152 to the microphone 200, weaken transmission of the pulsating pressure of the vortices in the first sound pickup channel 11, further reduce the impact of the wind noise, achieve a better wind noise reduction effect, and significantly improve a sound pickup effect of the microphone 200.

For example, as shown in FIG. 4, the extension direction of the first sound pickup port 151 and the extension direction of the second sound pickup port 152 may be consistent with the first direction (x direction), the extension direction of the first horizontal segment 111 and the extension direction of the second horizontal segment 113 may be consistent with the third direction (z direction), the extension direction of the first sound pickup port 151 is perpendicular to the extension direction of the first horizontal segment 111, and the extension direction of the second sound pickup port 152 is perpendicular to the extension direction of the second horizontal segment 113.

With continued reference to FIG. 4, the first sound pickup channel 11 is formed between the inner surface 131 of the fairing 13 and the mounting wall surface 121 of the housing 12. A width (slit width) of the first sound pickup channel 11 may be a vertical distance between the inner surface 131 and the mounting wall surface 121.

The first sound pickup port 151 and the second sound pickup port 152 are provided on the fairing 13. A width of the first sound pickup port 151 and a width of the second sound pickup port 152 are opening widths. For example, a notch is provided at an edge of a side wall of the fairing 13 to form the first sound pickup port 151, and a depth of the notch is the width of the first sound pickup port. The fairing 13 is fixed to the housing 12, and the edge of the side wall of the fairing 13 is in contact with the mounting wall surface 121. A distance between a bottom surface (a surface opposite to the mounting wall surface) of the first sound pickup port 151 and the mounting wall surface 121 is the width of the first sound pickup port, for example, h in FIG. 4.

It may be understood that the housing 12 of the temple has a relatively great length (a length along the second direction). The first sound pickup port 151 and the second sound pickup port 152 provided on the fairing 13 or the housing 12 and the first sound pickup channel 11 may also have relatively great lengths along the second direction.

FIG. 5 is an enlarged view of a first sound pickup port of a temple according to an embodiment of this application.

As shown in FIG. 5, the first sound pickup port 151 is used as an example. The first sound pickup port 151 may be an elongated slit structure. Correspondingly, the second sound pickup port may also be an elongated slit structure.

With reference to FIG. 4, the first sound pickup channel 11 may be a slit-shaped channel with a relatively narrow slit width, so that the first sound pickup channel 11 may be an elongated slit structure. The first sound pickup channel 11 may be a slit-shaped channel with a relatively small slit width and a relatively large area. Air resistance in the first sound pickup channel 11 is relatively large. This can further weaken transmission of the pulsating pressure of the wind vortices in the first sound pickup channel 11, and optimize the noise reduction effect. In addition, the wind vortices entering from the narrow first sound pickup port 151, second sound pickup port 152, and first sound pickup channel 11 become laminar flow, which can also reduce the impact of the wind noise on the microphone.

For example, the slit width of the first sound pickup port 151, the slit width of the second sound pickup port 152, and the slit width of the first sound pickup channel 11 may be equal, which facilitates assembly implementation.

For example, the slit width of the first sound pickup port 151, the slit width of the second sound pickup port 152, and the slit width of the first sound pickup channel 11 may all be 0.5 mm. With the relatively small slit widths, the noise reduction effect can be improved more effectively.

A length of the first sound pickup channel 11 in the first direction may be greater than or equal to a length of the first sound pickup port 151 or the second sound pickup port 152 in the first direction, to ensure that the first sound pickup channel 11 has a relatively large area.

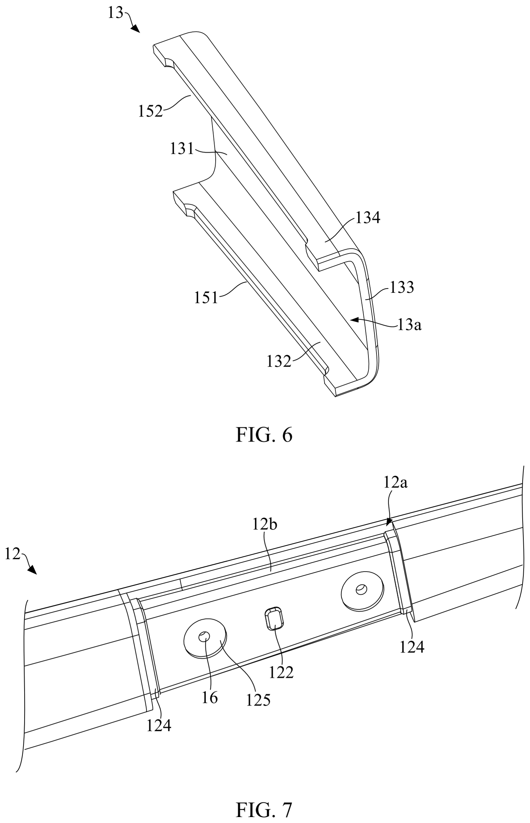

FIG. 6 is a diagram of a structure of a fairing according to an embodiment of this application.

As shown in FIG. 6, the fairing 13 may include a first side wall 132, a second side wall 133, and a third side wall 134. The first side wall 132 and the third side wall 134 may be located at two ends of the second side wall 133, and the first side wall 132 and the third side wall 134 may be disposed opposite to each other. For example, the first side wall 132 and the third side wall 134 may be disposed opposite to each other along the first direction, so that a shape of the fairing 13 is similar to a C shape or a square bracket shape.

Inner surfaces of the first side wall 132, the second side wall 133, and the third side wall 134 may enclose the groove structure 13a. The structure is simple and facilitates implementation of the groove structure 13a. Under a condition that the bent first sound pickup channel is formed, this helps reduce difficulty in the structural design and production of the fairing. The inner surface of the first side wall 132 is opposite to the inner surface of the third side wall 134, and the inner surface of the second side wall 133 is separately connected to the inner surface of the first side wall 132 and the inner surface of the third side wall 134.

The first sound pickup port 151 and the second sound pickup port 152 may be provided on the fairing 13. For example, an opening may be provided at an end that is of the first side wall 132 and that faces away from the second side wall 133, to form the first sound pickup port 151. The first sound pickup port 151 may be a notch formed at an edge of the end that is of the first side wall 132 and that faces away from the second side wall 133.

An opening may be provided at an end that is of the third side wall 134 and that faces away from the second side wall 133, to form the second sound pickup port 152. The second sound pickup port 152 may also be a notch formed at an edge of the end that is of the third side wall 134 and that faces away from the second side wall 133.

Certainly, in some other examples, the first sound pickup port 151 may be an opening at an end that is of the first side wall 132 and that faces away from the second side wall 133, and the opening may not extend through an edge of the end that is of the first side wall 132 and that faces away from the second side wall 133. The second sound pickup port 152 may not extend through an edge of an end that is of the third side wall 134 and that faces away from the second side wall 133, either.

Therefore, the sound pickup ports are provided on the fairing 13, and no opening needs to be provided on the housing 12 to form a sound pickup port. This further reduces impact on a structural layout of the housing 12, and facilitates protection of structural components in the accommodating cavity of the housing 12.

Certainly, in some examples, the first sound pickup port 151 and the second sound pickup port 152 may alternatively be provided on the housing 12. Alternatively, in some examples, one sound pickup port may be provided on one of the fairing 13 and the housing 12, and another sound pickup port may be provided on the other.

Alternatively, in some examples, openings may be provided on the housing and the fairing respectively. For example, an opening may be provided at an end that is of the first side wall of the fairing and that faces away from the second side wall, and the opening may be a notch at an edge of the end; and an opening may also be provided at a position that is on the mounting wall surface of the housing and that corresponds to the first side wall. When the fairing covers the housing, the opening on the fairing and the opening on the housing are opposite to each other and jointly form a sound pickup port.

FIG. 7 is a diagram of a partial structure of a housing according to an embodiment of this application.

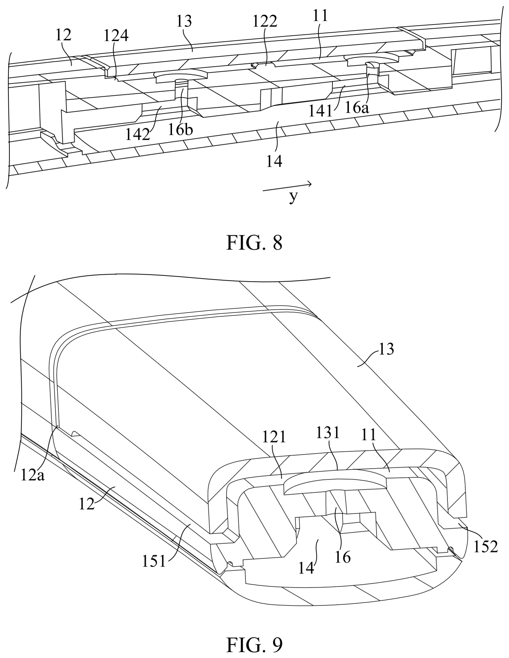

To improve assembly integration between the fairing and the housing, as shown in FIG. 7, a mating groove 12a may be provided on the outer surface of the housing 12, and the protrusion structure 12b may be formed by a protrusion of a part of an inner bottom surface of the mating groove 12a. A remaining part of the inner bottom surface of the mating groove 12a and an outer surface of the protrusion structure 12b may jointly form the mounting wall surface of the housing 12. The fairing 13 may be accommodated in the mating groove 12a (with reference to FIG. 9), so that relatively high assembly integration is achieved between the fairing and the housing 12. This helps improve aesthetics of the temple.

An assembly groove may also be provided on the mounting wall surface of the housing 12. For example, an assembly groove 125 is provided on the protrusion structure 12b. The assembly groove 125 may cover an opening of the second sound pickup channel 16 on the mounting wall surface. The assembly groove 125 may communicate with the second sound pickup channel 16. The assembly groove 125 may be configured to mount a dust filter, to prevent dust or the like from entering the microphone from the second sound pickup channel 16 and ensure the sound pickup effect of the microphone.

A protruding fixing portion 124 may also be disposed on the protrusion structure 12b. The fixing portion 124 may be located at two ends of the protrusion structure 12b along the second direction. The fixing portion 124 may be configured to support the fairing, and achieve a fixed connection to the fairing.

FIG. 8 is a diagram of a partial cross-sectional structure of the temple in FIG. 1 along a B-B plane.

For example, with reference to FIG. 8, an adhesive layer (not shown in the figure) may be formed on the fixing portion 124, the fairing 13 covers the housing 12, and the fixing portion 124 provides support between the fairing 13 and the housing 12, to ensure that the first sound pickup channel 11 can be formed between the fairing 13 and the housing 12. In addition, the adhesive layer may bond and fix the fairing 13 to the fixing portion 124, to ensure a secure connection between the fairing 13 and the housing 12.

With continued reference to FIG. 7 and FIG. 8, a support portion 122 may also be disposed on the mounting wall surface (for example, the protrusion structure 12b) of the housing 12. As shown in FIG. 8, the fairing 13 covers the housing 12, and the support portion 122 may be located between the fairing 13 and the housing 12. The support portion 122 serves to support the fairing 13. Especially, when the first sound pickup channel 11 with a relatively large area is formed between the fairing 13 and the housing 12, the support portion 122 can effectively support the fairing 13, to alleviate or avoid a problem that denting or other phenomena occurring on the fairing 13 in a use process or the like affect aesthetics or even block the first sound pickup channel 11.

There may be one microphone or two microphones in the accommodating cavity 14. For example, the two microphones may be respectively a first microphone and a second microphone. The first microphone may be used as a primary microphone to play a main role in sound pickup. The second microphone may be used as a secondary microphone to assist in sound pickup. This can effectively improve the sound pickup effect, so that the device has better sound pickup performance.

For example, when there are two microphones, as shown in FIG. 8, the accommodating cavity 14 may have two chambers, for example, a first chamber 141 and a second chamber 142. The first chamber 141 may be configured to accommodate the first microphone, and the second chamber 142 may be configured to accommodate the second microphone. The first chamber 141 and the second chamber 142 may be distributed along the second direction. The first chamber 141 may be disposed closer to the connection end of the housing 12, and the second chamber 142 may be disposed closer to the wearing end of the housing 12.

There may also be two second sound pickup channels, for example, a first channel 16a and a second channel 16b. The first channel 16a may communicate with the first chamber 141, the second channel 16b may communicate with the second chamber 142, and the first sound pickup channel 11 may separately communicate with the first channel 16a and the second channel 16b, so that the first sound pickup channel 11 separately communicates with the first microphone in the first chamber 141 and the second microphone in the second chamber 142.

FIG. 9 is a diagram of another cross-sectional structure of a temple according to an embodiment of this application.

To further enhance the wind noise reduction effect and the sound pickup effect, in a possible example, with continued reference to FIG. 8 and FIG. 9, there may be one first sound pickup channel 11, that is, the fairing 13 covers the housing 12, and the gap between the inner surface 131 of the fairing 13 and the mounting wall surface 121 of the housing 12 forms one first sound pickup channel 11 as a whole.

Two ends of the first sound pickup channel 11 respectively communicate with the first sound pickup port 151 and the second sound pickup port 152, and the first sound pickup channel 11 communicates with the second sound pickup channel 16. For example, the first sound pickup channel 11 separately communicates with the first channel 16a and the second channel 16b (as shown in FIG. 8). The first sound pickup port 151 and the second sound pickup port 152 in communication can form a pressure relief design, to reduce the impact of the wind noise on the microphone 200.

Specifically, as shown in FIG. 9, the wind vortices may enter through the first sound pickup port 151, and some of the wind vortices enter the accommodating cavity 14 through the second sound pickup channel 16. For example, the wind vortices enter the first chamber through the first channel, and enter the second chamber through the second channel. Some of the wind vortices may flow out through the second sound pickup port 152, thereby achieving a pressure relief effect. This can further reduce the wind noise signals picked up by the microphone 200, and further improve the wind noise reduction effect. Correspondingly, some of the wind vortices entering through the second sound pickup port 152 may flow out through the first sound pickup port 151, thereby further improving the wind noise reduction effect.

Along a direction (that is, the second direction) in which the first channel 16a and the second channel 16b are distributed, the first sound pickup channel 11 may be divided into an area corresponding to the first channel 16a and an area corresponding to the second channel 16b (as shown in FIG. 8). For example, the first sound pickup channel 11 is divided into two areas by using the support portion 122 as a center line, where one area is located at a position corresponding to the first channel 16a, and the other area is located at a position corresponding to the second channel 16b. The first sound pickup port is located at one end of the area corresponding to the first channel and the area corresponding to the second channel. The first sound pickup port may overlap the area corresponding to the first channel and the area corresponding to the second channel. For example, the first sound pickup port may extend along the second direction, from the area corresponding to the first channel, to the area corresponding to the second channel, so that the sound or the like entering from the first sound pickup port passes through the first sound pickup channel and then enters the first microphone in the first chamber through the first channel and the second microphone in the second chamber through the second channel.

Correspondingly, the second sound pickup port is located at the other end of the area corresponding to the first channel and the area corresponding to the second channel. The second sound pickup port may overlap the area corresponding to the first channel and the area corresponding to the second channel. For example, the second sound pickup port may also extend along the second direction, from the area corresponding to the first channel, to the area corresponding to the second channel, so that the sound or the like entering from the second sound pickup port passes through the first sound pickup channel and then enters the first microphone in the first chamber through the first channel and the second microphone in the second chamber through the second channel.

Alternatively, the first sound pickup port may overlap only the area corresponding to the first channel. For example, the first sound pickup port is distributed at one end of the area corresponding to the first channel, and does not extend to the area corresponding to the second channel. The second sound pickup port may also overlap only the area corresponding to the second channel. For example, the second sound pickup port is distributed at the other end of the area corresponding to the second channel, and does not extend to the area corresponding to the first channel. Most of the sound entering from the first sound pickup port enters the first microphone in the first chamber through the first channel, and most of the sound entering from the second sound pickup port enters the second microphone in the second chamber through the second channel. This helps improve an overall sound pickup effect of the device.

It may be understood that there may be one fairing 13. The fairing 13 covers the housing 12, so that the first sound pickup channel 11 is formed between the fairing 13 and the housing 12. Alternatively, there may be two fairings 13, and the two fairings 13 may cover the housing 12 in parallel, and form the first sound pickup channel with the housing 12.

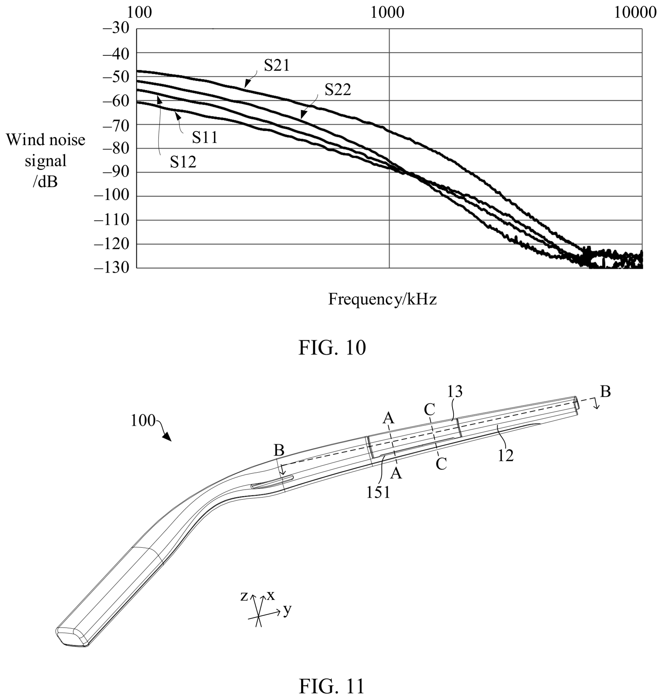

FIG. 10 is a diagram illustrating a comparison of frequency responses of wind noise signals of a temple according to an embodiment of this application. In FIG. 10, curves S11 and S12 are respectively frequency response curves of wind noise signals of the first microphone and the second microphone in the temple provided in this embodiment of this application in a scenario with wind noise energy of 5 m/s. Curves S21 and S22 are respectively frequency response curves of wind noise signals of a first microphone and a second microphone in a temple in a comparison group in a scenario with wind noise energy of 5 m/s. For example, the temple in the comparison group includes a housing, a sound pickup port is provided on a top side surface or a bottom side surface of the housing, a sound pickup channel is provided in the housing, the sound pickup port communicates with the first microphone and the second microphone through the sound pickup channel, and the sound pickup channel is a straight channel (without a bent segment).

As shown in FIG. 10, compared with the comparison group, the wind noise signals of the first microphone and the second microphone in the temple provided in this embodiment of this application are reduced by a maximum of 9 dB at 100 Hz, and are reduced by 2 dB at 1 kHz.

**Table 1 shows a comparison of wind noise energy gains of the first microphone and the second microphone in two scenarios with 5 m/s and 10 m/s in a frequency band of 100 kHz to 8 kHz.**

| | Wind noise energy at 5 m/s | Wind noise energy at 10 m/s | Energy difference |
|---|---|---|---|
| First microphone in the comparison group | -37.92 | -22.90 | -15.02 |
| Second microphone in the comparison group | -43.09 | -27.04 | -16.05 |
| First microphone in this application | -51.89 | -34.39 | -17.50 |
| Second microphone in this application | -47.24 | -29.77 | -17.47 |
| Wind noise gain | 8.80 | 7.35 | |

With reference to FIG. 10 and Table 1, it can be learned that the temple provided in this embodiment of this application has a better wind noise prevention effect. In the temple provided in this embodiment of this application, wind noise gains of the first microphone and the second microphone are 7 dB to 9 dB, and wind noise is increased to 8 m/s.

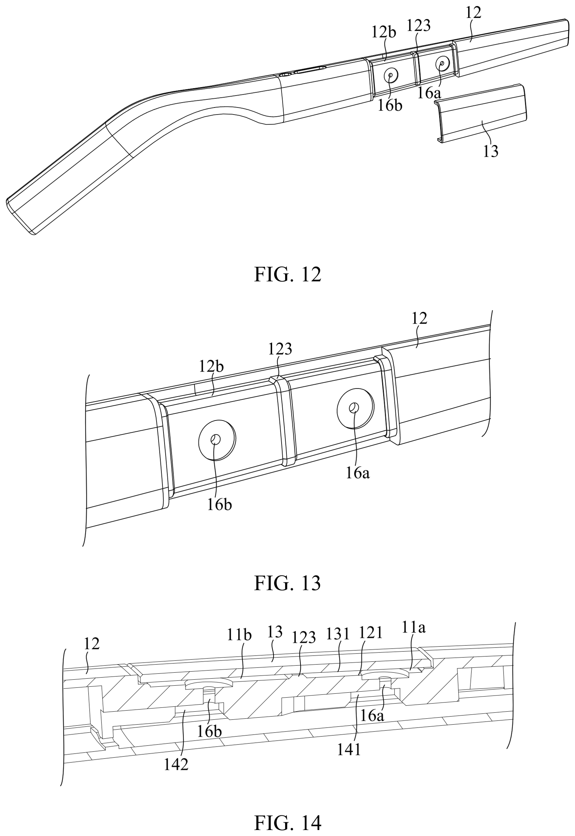

FIG. 11 is a diagram of a structure of another temple according to an embodiment of this application. FIG. 12 is an exploded diagram of a structure of another temple according to an embodiment of this application.

In another possible example, the housing may accommodate the first microphone and the second microphone, and there may be two first sound pickup channels in the housing. As shown in FIG. 11, the fairing 13 covers the outer surface of the housing 12. For specific structures of the fairing 13 and the housing 12, refer to the foregoing description.

With reference to FIG. 12, two second sound pickup channels may be provided on the mounting wall surface of the housing 12: the first channel 16a and the second channel 16b. The gap between the inner surface of the fairing 13 and the mounting wall surface of the housing 12 may form two independent first sound pickup channels.

FIG. 13 is an enlarged partial view of a housing of a temple according to an embodiment of this application.

Specifically, with reference to FIG. 12 and FIG. 13, a separation portion 123 may be disposed on the mounting wall surface of the housing 12. For example, a protruding separation portion 123 is provided on an outer wall (a side facing toward the fairing 13) of the protrusion structure 12b. The separation portion 123 may extend from a side that is of the protrusion structure 12b and that is adjacent to the first sound pickup port, to a side that is adjacent to the second sound pickup port. The separation portion 123 may be located between one end of the first channel 16a on the mounting wall surface (the outer wall of the protrusion structure 12b) and one end of the second channel 16b on the mounting wall surface (the outer wall of the protrusion structure 12b).

FIG. 14 is a diagram of a partial cross-sectional structure of the temple in FIG. 11 along a B-B plane.

As shown in FIG. 14, the separation portion 123 is located between the mounting wall surface 121 of the housing 12 and the inner surface 131 of the fairing 13. In this way, the separation portion 123 may partition the gap between the mounting wall surface 121 and the inner surface 131 into two parts, to separately form two relatively independent first sound pickup channels, for example, a third channel 11a and a fourth channel 11b.

The two first sound pickup channels may respectively communicate with the two second sound pickup channels. For example, the third channel 11a may communicate with the first channel 16a, and the fourth channel 11b may communicate with the second channel 16b.

In other words, sound or the like entering the third channel 11a is transmitted to the first microphone in the first chamber 141 through the first channel 16a, and sound or the like entering the fourth channel 11b is transmitted to the second microphone in the second chamber 142 through the second channel 16b. The sound pickup channels corresponding to the first microphone and the second microphone are relatively independent. This helps improve sound pickup effects of the first microphone and the second microphone, and further helps improve a sound pickup effect of the entire device.

In some examples, both the two first sound pickup channels may communicate with the first sound pickup port and the second sound pickup port, that is, the third channel 11a and the fourth channel 11b may share the first sound pickup port and the second sound pickup port.

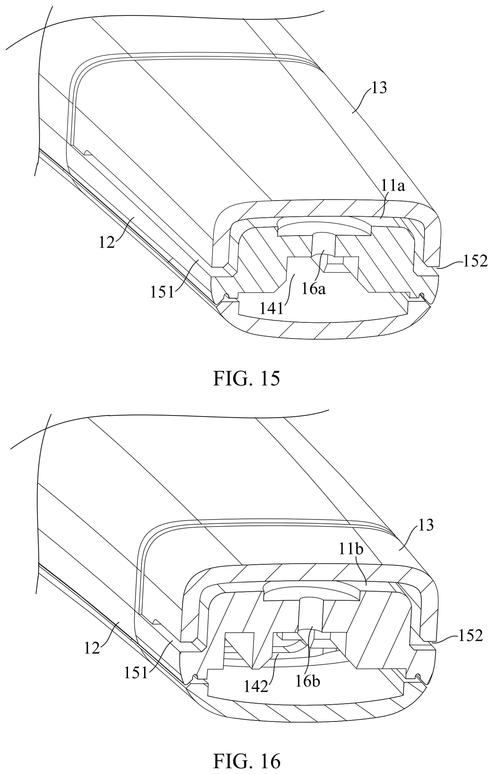

FIG. 15 is a diagram of a partial cross-sectional structure of the temple in FIG. 11 along a C-C plane. FIG. 16 is a diagram of a partial cross-sectional structure of the temple in FIG. 11 along an A-A plane.

As shown in FIG. 15, the first sound pickup port 151 and the second sound pickup port 152 separately communicate with the third channel 11a. Sound entering from the first sound pickup port 151 and the second sound pickup port 152 may be transmitted to the third channel 11a, and transmitted to the first microphone in the first chamber 141 through the first channel 16a. The bent and elongated third channel 11a has a good noise reduction effect. The first sound pickup port 151 and the second sound pickup port 152 in communication may also form a pressure relief design. This further improves the noise reduction effect, significantly reduces the impact of the wind noise on the first microphone, and improves the sound pickup effect of the first microphone.

Correspondingly, as shown in FIG. 16, the first sound pickup port 151 and the second sound pickup port 152 separately communicate with the fourth channel 11b. Sound entering from the first sound pickup port 151 and the second sound pickup port 152 may be transmitted to the fourth channel 11b, and transmitted to the second microphone in the second chamber 142 through the second channel 16b. The bent and elongated fourth channel 11b has a good noise reduction effect. In addition, the first sound pickup port 151 and the second sound pickup port 152 in communication may also form a pressure relief design. This further improves the noise reduction effect, significantly reduces the impact of the wind noise on the second microphone, and improves the sound pickup effect of the second microphone.

For example, the first sound pickup port 151 is located at one end of the third channel 11a and the fourth channel 11b, and the first sound pickup port 151 may separately overlap the third channel 11a and the fourth channel 11b. For example, the first sound pickup port 151 may extend from the third channel 11a to the fourth channel 11b along the second direction.

Correspondingly, the second sound pickup port 152 is located at the other end of the third channel 11a and the fourth channel 11b, and the second sound pickup port 152 may separately overlap the third channel 11a and the fourth channel 11b. For example, the second sound pickup port 152 may extend from the third channel 11a to the fourth channel 11b along the second direction. This enables the first sound pickup port 151 to separately communicate with the third channel 11a and the fourth channel 11b, enables the second sound pickup port 152 to separately communicate with the third channel 11a and the fourth channel 11b, and can ensure that the first sound pickup port 151 and the second sound pickup port 152 have greater lengths, thereby helping improve the noise reduction effect.

It may be understood that, in this example, there may be one fairing 13. The fairing 13 covers the mounting wall surface that is of the housing 12 and that has the separation portion, so that two first sound pickup channels are formed between the inner surface of the fairing 13 and the mounting wall surface of the housing 12.

Alternatively, there may be two fairings 13, and the two fairings 13 separately cover the mounting wall surface that is of the housing 12 and that has the separation portion, where an inner surface of one fairing 13 forms the third channel 11a with a part of the mounting wall surface of the housing 12, and an inner surface of the other fairing 13 forms the fourth channel 11b with another part of the mounting wall surface of the housing 12.

Alternatively, in some examples, one of the two first sound pickup channels may communicate with the first sound pickup port, and the other may communicate with the second sound pickup port.

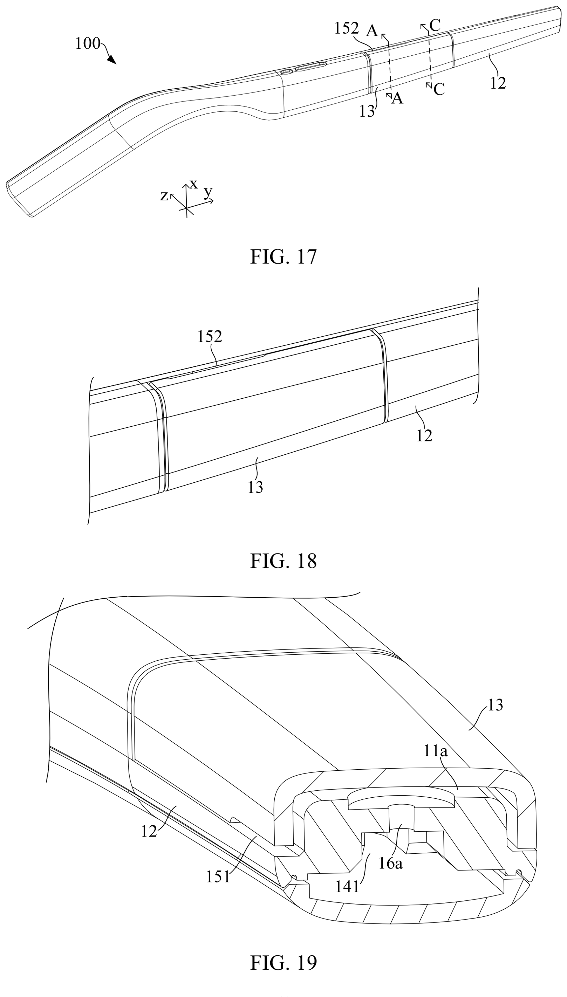

FIG. 17 is a diagram of a structure of still another temple according to an embodiment of this application. FIG. 18 is an enlarged view of a partial structure of the temple in FIG. 17.

With reference to FIG. 17 and FIG. 18, the second sound pickup port 152 is used as an example. The second sound pickup port 152 may be located only at one end of the fourth channel (not shown in the figure), and does not extend to the third channel. The second sound pickup port 152 overlaps only the fourth channel, and the second sound pickup port 152 communicates with the fourth channel.

Correspondingly, the first sound pickup port may be located only at one end of the third channel, and does not extend to the fourth channel. The first sound pickup port communicates with the third channel, and the first sound pickup port overlaps only the third channel. In other words, the sound pickup ports and sound pickup channels that correspondingly communicate with the first microphone and the second microphone are all relatively independent, so that the sound pickup effects of the first microphone and the second microphone can be improved more effectively.

FIG. 19 is a diagram of a partial cross-sectional structure of the temple in FIG. 17 along a C-C plane.

As shown in FIG. 19, the first sound pickup port 151 communicates with the third channel 11a. Sound or the like entering from the first sound pickup port 151 may enter the first microphone in the first chamber 141 after passing through the third channel 11a and the first channel 16a. The bent and elongated third channel 11a may have a good noise reduction effect, and may achieve an objective of reducing the wind noise signals of the first microphone.

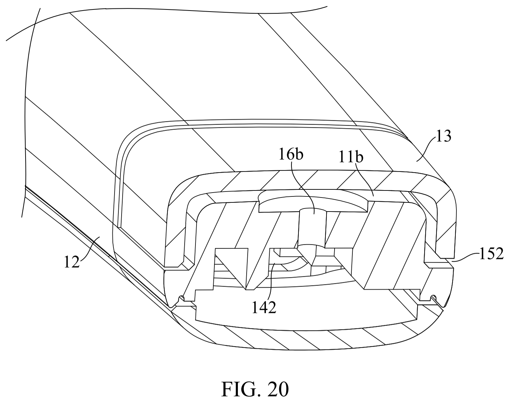

FIG. 20 is a diagram of a partial cross-sectional structure of the temple in FIG. 17 along an A-A plane.

As shown in FIG. 20, the second sound pickup port 152 communicates with the fourth channel 11b. Sound or the like entering from the second sound pickup port 152 may enter the second microphone in the second chamber 142 after passing through the fourth channel 11b and the second channel 16b. The bent and elongated fourth channel 11b may have a good noise reduction effect, and may achieve an objective of reducing the wind noise signals of the second microphone.

Correspondingly, in this example, there may be one fairing 13, and the fairing 13 covers the housing 12 having the separation portion 123, so that the third channel 11a and the fourth channel 11b are formed between the fairing 13 and the housing 12. Alternatively, there may be two fairings 13, and the two fairings 13 separately cover the housing 12, where the third channel 11a is formed between one fairing 13 and the housing 12, and the fourth channel 11b is formed between the other fairing 13 and the housing 12.

It should be noted that values and value ranges in embodiments of this application are approximate values, and there may be an error within a specific range. A person skilled in the art may consider that the error is negligible.

In the descriptions of embodiments of this application, it should be noted that, unless otherwise clearly specified and defined, the term "mounting", "connected to", or "connection" should be understood in a broad sense, for example, may be a fixed connection, or may be an indirect connection through an intermediate medium, or may be an internal communication between two elements or an interaction relationship between two elements. A person of ordinary skill in the art may understand specific meanings of the foregoing terms in embodiments of this application based on specific cases. The terms such as "first", "second", "third", "fourth", and the like (if any) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions described in the foregoing embodiments may still be modified, or some or all of technical features thereof may be equivalently replaced. However, these modifications or replacements do not depart from the scope of the technical solutions in embodiments of this application.

## Claims

1. A temple, comprising:
a housing, wherein a mounting wall surface is provided on an outer surface of the housing, an accommodating cavity is provided at a position that is in the housing and that corresponds to the mounting wall surface, and the accommodating cavity is configured to accommodate a microphone; and
a fairing, wherein the fairing covers the mounting wall surface, there is a gap between an inner surface of the fairing and the mounting wall surface to form at least one first sound pickup channel, and the first sound pickup channel communicates with the accommodating cavity, wherein
a first sound pickup port and a second sound pickup port are provided on at least one of the fairing and the housing, the first sound pickup port and the second sound pickup port separately communicate with the first sound pickup channel, and the first sound pickup port and the second sound pickup port are respectively located on two sides of the housing.

2. The temple according to claim 1, wherein the inner surface of the fairing encloses a groove structure; and
a part of the mounting wall surface protrudes to form a protrusion structure that fits the groove structure, and there is a gap between the groove structure and the protrusion structure to form the first sound pickup channel.

3. The temple according to claim 2, wherein the fairing comprises a first side wall, a second side wall, and a third side wall that are connected, the second side wall is located between the first side wall and the third side wall, and the first side wall and the third side wall are opposite to each other;
inner surfaces of the first side wall, the second side wall, and the third side wall enclose the groove structure; and
the first sound pickup port is provided at an end that is of the first side wall and that faces away from the second side wall, and the second sound pickup port is provided at an end that is of the third side wall and that faces away from the second side wall.

4. The temple according to any one of claims 1 to 3, wherein a second sound pickup channel is provided on the mounting wall surface, and the second sound pickup channel separately communicates with the first sound pickup channel and the accommodating cavity.

5. The temple according to claim 4, wherein the first sound pickup channel comprises at least one bent segment, the bent segment is located between the second sound pickup channel and at least one of the first sound pickup port and the second sound pickup port, and at least one of the first sound pickup port and the second sound pickup port communicates with the second sound pickup channel through the bent segment.

6. The temple according to claim 5, wherein the first sound pickup channel comprises a first horizontal segment, a vertical segment, and a second horizontal segment that are sequentially connected, one bent segment is connected between the first horizontal segment and the vertical segment, and another bent segment is connected between the second horizontal segment and the vertical segment; and
the first sound pickup port communicates with the first horizontal segment, the second sound pickup port communicates with the second horizontal segment, and the vertical segment communicates with the second sound pickup channel.

7. The temple according to claim 6, wherein an extension direction of the first sound pickup port intersects an extension direction of the first horizontal segment, and an extension direction of the second sound pickup port intersects an extension direction of the second horizontal segment.

8. The temple according to claim 4, wherein the accommodating cavity comprises a first chamber and a second chamber, and each of the first chamber and the second chamber is configured to accommodate a microphone; and
there are two second sound pickup channels: a first channel and a second channel, wherein the first channel communicates with the first chamber, and the second channel communicates with the second chamber.

9. The temple according to claim 8, wherein there is one first sound pickup channel, wherein two ends of the first sound pickup channel respectively communicate with the first sound pickup port and the second sound pickup port; and
the first channel and the second channel separately communicate with the first sound pickup channel.

10. The temple according to claim 8 or 9, wherein a support portion is disposed on the mounting wall surface, and the support portion is located between the mounting wall surface and the inner surface of the fairing.

11. The temple according to claim 8, wherein there are two first sound pickup channels: a third channel and a fourth channel, wherein
two ends of the third channel respectively communicate with the first sound pickup port and the second sound pickup port, and two ends of the fourth channel respectively communicate with the first sound pickup port and the second sound pickup port; and
the third channel communicates with the first channel, and the fourth channel communicates with the second channel.

12. The temple according to claim 8, wherein there are two first sound pickup channels: a third channel and a fourth channel, wherein
the first sound pickup port communicates with the third channel, and the second sound pickup port communicates with the fourth channel; and
the third channel communicates with the first channel, and the fourth channel communicates with the second channel.

13. The temple according to claim 11 or 12, wherein a separation portion is disposed on the mounting wall surface, the separation portion is located between the inner surface of the fairing and the mounting wall surface, and the separation portion extends from a side adjacent to the first sound pickup port to a side adjacent to the second sound pickup port; and
the separation portion partitions the gap between the inner surface of the fairing and the mounting wall surface to form the two first sound pickup channels.

14. The temple according to any one of claims 1 to 3, wherein the outer surface of the housing comprises a top side surface and a bottom side surface, wherein the top side surface and the bottom side surface are disposed opposite to each other in a first direction; and
the outer surface of the housing further comprises an inner side surface and an outer side surface, wherein the inner side surface and the outer side surface are disposed opposite to each other in a second direction, the second direction is perpendicular to the first direction, the inner side surface is configured to be in contact with a user when the temple is worn, and the mounting wall surface is formed on the outer side surface.

15. The temple according to any one of claims 1 to 3, wherein the first sound pickup port and the second sound pickup port are respectively elongated slit structures, and the first sound pickup channel is a slit-shaped channel.

16. The temple according to claim 15, wherein widths of the first sound pickup channel, the first sound pickup port, and the second sound pickup port are all 0.5 mm.

17. Glasses, comprising a frame and the temple according to any one of claims 1 to 16, wherein the temple is fastened to the frame, and the glasses are worn by a user by using the frame and the temple.

18. A wearable device, comprising a wearable apparatus and the temple according to any one of claims 1 to 16, wherein the wearable apparatus is configured to implement interaction, the temple is fastened to the wearable apparatus, and the wearable apparatus is worn by a user by using the temple.
